# EUROPEAN PATENT APPLICATION

(11) **EP 4 394 370 A1**
(43) Date of publication of application: **03.07.2024**
(21) Application number: 22861172.9
(22) Date of filing: 15.08.2022
(51) Int. Cl.: G01N 27/333, G01N 27/416

(54) **ALL-SOLID POTASSIUM ION SELECTIVE ELECTRODE, AND METHOD FOR MANUFACTURING ALL-SOLID POTASSIUM ION SELECTIVE ELECTRODE**

(30) Priority: 24.08.2021 JP 2021136435
(71) Applicant: KOA Corporation, Ina-shi, Nagano 396-0025 (JP); TOKYO UNIVERSITY OF SCIENCE FOUNDATION, Tokyo 162-8601 (JP)
(72) Inventor: TAKAYAMA, Toshiharu, Ina-shi, Nagano 396-0025 (JP); MATSUI, Takahiro, Ina-shi, Nagano 396-0025 (JP); KURIBAYASHI, Tomoyuki, Ina-shi, Nagano 396-0025 (JP); TAKEI, Yuko, Ina-shi, Nagano 396-0025 (JP); KOMABA, Shinichi, Tokyo 162-8601 (JP); TATARA, Ryoichi, Tokyo 162-8601 (JP); ISHIHARA, Kenta, Tokyo 162-8601 (JP)
(74) Representative: Klang, Alexander H.
(86) International application number: PCT/JP2022/030856
(87) International publication number: WO 2023/026883

(57) **Abstract**

The present invention relates to an all-solid-state ion-selective electrode having an insertion material, and a method of manufacturing such an all-solid-state ion-selective electrode. The all-solid-state potassium ion-selective electrode (1) includes: a conductor (2); an insertion material (10) formed on a surface of the conductor (2); and a potassium ion-sensitive membrane (20) covering the insertion material (10). The insertion material (10) includes at least a Prussian blue analog represented by a structural formula KₓFe[Fe(CN)₆]_{y}·nH₂O, where x is a numerical number larger than 0 and less than or equal to 2, y is a numerical number larger than 0 and less than or equal to 1, and n is a numerical number larger than or equal to 0.

## Description

### Technical Field

The present invention relates to an all-solid-state ion-selective electrode having an insertion material, and a method of manufacturing such an all-solid-state ion-selective electrode.

### Background Art

An ion-selective electrode is used to measure a concentration of ions in a solution. The ion-selective electrode, together with a reference electrode, is brought into contact with the solution (i.e., objective liquid) that is an object to be measured, so that a potential difference is generated between the ion-selective electrode and the reference electrode. A concentration of specific ions in the solution can be measured based on the potential difference generated. Such ion-selective electrode is used in various fields, such as environment, medicine, and agriculture.

A typical ion-selective electrode is constituted of an ion-sensitive membrane, an internal liquid, and an internal reference electrode. For the purpose of downsizing, an all-solid-state ion-selective electrode that does not use an internal liquid and an internal reference electrode has been developed. One example of such an all-solid-state ion-selective electrode is an ion-selective electrode having an electrode substrate directly covered with an ion-sensitive membrane.

### Citation List

### Patent Literature

Patent document 1: Japanese Examined Patent Publication No. 8-23544
Patent document 2: Japanese Examined Patent Publication No. 7-50059
Patent document 3: International Patent Publication No. WO 2017/047374
Patent document 4: Utility model registration No. 2546786

### Summary of Invention

### Technical Problem

The ion-selective electrode in which the electrode substrate is directly covered with the ion-sensitive membrane (this type of ion-selective electrode may be hereinafter referred to as conventional electrode) generally has a problem of low potential stability. If the potential stability is low, a detected value will fluctuate due to dark current flowing from a potentiostat or due to vibrations around a measuring system. Furthermore, the conventional electrode has a problem of low long-term stability of detected value. Specifically, even if a sample is immersed in an objective liquid of the same concentration, the detected value will vary greatly after several days. Therefore, each time such ion-selective electrode is used, calibration is required.

Therefore, the present invention provides an all-solid-state potassium ion-selective electrode with improved potential stability and improved long-term stability of detected value. Furthermore, the present invention provides a method of manufacturing such an all-solid-state potassium ion-selective electrode.

### Solution to Problem

In an embodiment, there is provided an all-solid-state potassium ion-selective electrode comprising: a conductor; an insertion material formed on a surface of the conductor; and a potassium ion-sensitive membrane covering the insertion material, the insertion material including at least a Prussian blue analog represented by a structural formula KₓFe[Fe(CN)₆]_{y}·nH₂O, where x is a numerical number larger than 0 and less than or equal to 2, y is a numerical number larger than 0 and less than or equal to 1, and n is a numerical number larger than or equal to 0.

In an embodiment, there is provided a manufacturing method for an all-solid-state potassium ion-selective electrode, comprising: producing slurry containing Prussian blue represented by a structural formula KₓFe[Fe(CN)₆]_{y}·nH₂O, where y is a numerical number larger than 0 and less than or equal to 1, and x is a numerical number larger than 0 and less than or equal to 2, n is a numerical number larger than or equal to 0; supplying the slurry onto a conductor and drying the slurry to form a compound membrane on a surface of the conductor; forming an insertion material on the surface of the conductor by immersing the compound membrane in a first potassium chloride aqueous solution and making K⁺ of the Prussian blue uniform; forming an ion-sensitive stock membrane on a surface of the insertion material by supplying a potassium ion-sensitive membrane stock liquid to the surface of the insertion material and drying the potassium ion-sensitive membrane stock liquid; and forming a potassium ion-sensitive membrane on the surface of the insertion material by immersing the ion-sensitive stock membrane in a second potassium chloride aqueous solution.

In an embodiment, the insertion material includes at least a Prussian blue analog represented by a structural formula KₓFe[Fe(CN)₆]_{y}·nH₂O, where x is a numerical number larger than 0 and less than or equal to 2.

In an embodiment, producing the slurry includes mixing the Prussian blue, multi-wall carbon nanotubes, and polyvinylidene fluoride.

### Advantageous Effects of Invention

The all-solid-state ion-selective electrode has the insertion material located between the conductor and the potassium ion-sensitive membrane. With these configurations, electrons are exchanged between the conductor and the potassium ion-sensitive membrane via the insertion material. The insertion material can improve the performance of exchanging the electrons between the conductor and the potassium ion-sensitive membrane and can lower a resistance value of the electrode. In addition, the insertion material can function as an internal reference electrode and can improve the long-term stability of detected value. As a result, the all-solid-state potassium ion-selective electrode can improve the potential stability and the long-term stability of detected value.

### Brief Description of Drawings

[FIG. 1] FIG. 1 is a plan view showing an embodiment of an all-solid-state ion-selective electrode;
[FIG. 2] FIG. 2 is a cross-sectional view taken along line A-A in FIG. 1;
[FIG. 3] FIG. 3 is a flowchart illustrating an embodiment of a method of manufacturing the all-solid-state potassium ion-selective electrode;
[FIG. 4] FIG. 4 is a flow chart explaining an embodiment of a method of producing slurry;
[FIG. 5] FIG. 5 is a schematic diagram showing an embodiment of a method of measuring a concentration of ions in a solution;
[FIG. 6] FIG. 6 is a schematic diagram showing another application example of the all-solid-state ion-selective electrode;
[FIG. 7] FIG. 7 is a schematic diagram showing an embodiment of an ion concentration measuring method using the all-solid-state ion-selective electrode shown in FIG. 6;
[FIG. 8] FIG. 8 is a diagram showing a calibration curve (or a standard curve) obtained by measuring potential of all-solid-state potassium ion-selective electrode in a KCl aqueous solution;
[FIG. 9] FIG. 9 shows a result of evaluating electrical resistance conducted by chronopotentiometry; and
[FIG. 10] FIG. 10 shows a result of evaluating the resistance of the electrode conducted by AC impedance measurement.

### Description of Embodiments

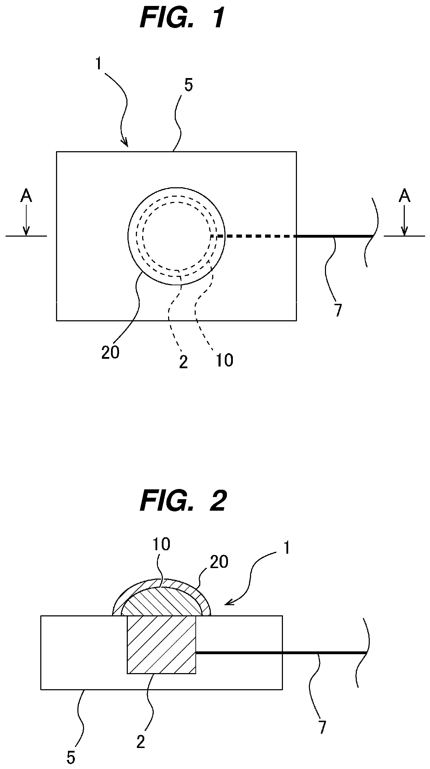

Embodiments of the present invention will be described below with reference to the drawings. FIG. 1 is a plan view showing an embodiment of an all-solid-state potassium ion-selective electrode 1, and FIG. 2 is a cross-sectional view taken along line A-A in FIG. 1. Hereinafter, in this specification, the all-solid-state potassium ion-selective electrode 1 may be simply referred to as electrode 1.

As shown in FIGS. 1 and 2, the electrode 1 includes a conductor 2 fixed to a substrate 5 which is an insulator, an insertion material 10 formed on a surface of the conductor 2, and an ion-sensitive membrane 20 formed on a surface of the insertion material 10. The conductor 2 is coupled to a conductive wire 7. The insertion material 10 is covered with the ion-sensitive membrane 20. In an example, the conductor 2 is made of platinum (Pt).

The ion-sensitive membrane 20 of this embodiment is a potassium ion-sensitive membrane configured to allow potassium ions (K⁺) to pass therethrough. The insertion material 10 includes a Prussian blue analog. The structural formula of the Prussian blue analog of this embodiment is expressed by

KₓFe[Fe(CN)₆]_{y}·nH₂O (1)

where x is a numerical number larger than 0 and less than or equal to 2, y is a numerical number larger than 0 and less than or equal to 1, and n is a numerical number larger than or equal to 0. Hereinafter, in this specification, the electrode 1 including the potassium ion-sensitive membrane and the Prussian blue analog represented by the above structural formula (1) is defined as the all-solid-state potassium ion-selective electrode 1.

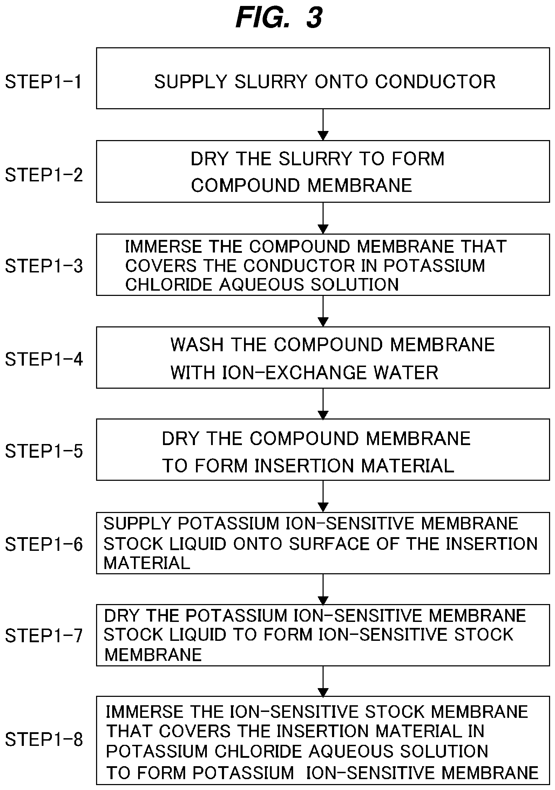

An embodiment of a method of manufacturing the all-solid-state potassium ion-selective electrode 1 will be described below with reference to a flowchart shown in FIG. 3. In step 1-1, a slurry (details will be described later) containing Prussian blue is supplied onto the platinum conductor 2 that has been formed on the substrate 5. Specifically, 1 µL of slurry is dropped onto the conductor 2. The structural formula of Prussian blue in the slurry of this embodiment is expressed by

KₓFe[Fe(CN)₆]_{y}·nH₂O (3)

where x is a numerical number larger than 0 and less than or equal to 2, and n is a numerical number larger than or equal to 0.

In step 1-2, the slurry is dried at room temperature to form a compound membrane on the surface of the conductor 2. The conductor 2 is covered with the compound membrane.

In step 1-3, the compound membrane covering the conductor 2 is immersed in a potassium chloride aqueous solution (or a first potassium chloride aqueous solution), so that K⁺ of Prussian blue contained in the compound membrane becomes uniform by conditioning. The conditioning is a pretreatment for enabling compound to exhibit its original functions. Specifically, the compound membrane is immersed in a 0.01M potassium chloride aqueous solution (KCl aqueous solution) for 24 hours.

In step 1-4, the conductor 2 and the compound membrane are removed from the potassium chloride aqueous solution, and the compound membrane is washed with ionexchange water.

In step 1-5, the compound membrane is dried. Specifically, the compound membrane is dried at room temperature for 12 hours. Through the steps 1-3 to 1-5, the insertion material 10 made of the compound membrane is formed on the surface of the conductor 2. The conductor 2 is covered with the insertion material 10. The insertion material 10 formed by the above steps 1-3 to 1-5 contains the Prussian blue analog represented by the above-mentioned structural formula (1).

In step 1-6, a potassium ion-sensitive membrane stock liquid (details will be described later) is supplied to the surface of the insertion material 10. Specifically, 50 µL of the potassium ion-sensitive membrane stock liquid is dropped onto the surface of the insertion material 10. In step 1-7, the potassium ion-sensitive membrane stock liquid is dried at room temperature to form an ion-sensitive stock membrane on the surface of the insertion material 10. The insertion material 10 is covered with the ion-sensitive stock membrane.

In step 1-8, the ion-sensitive stock membrane covering the insertion material 10 is immersed in a potassium chloride aqueous solution (or a second potassium chloride aqueous solution). Specifically, the ion-sensitive stock membrane is immersed in a 0.01M potassium chloride aqueous solution (KCl aqueous solution) for 24 hours. As a result of the step 1-8, the potassium ion-sensitive membrane 20 is formed on the surface of the insertion material 10. The insertion material 10 is covered with the potassium ion-sensitive membrane 20. The potassium ion-sensitive membrane 20 formed in the step 1-8 is an ion-sensitive membrane configured to allow potassium ions (K⁺) to pass therethrough. Through the steps 1-1 to 1-8 discussed above, the all-solid potassium ion-selective electrode 1 is manufactured.

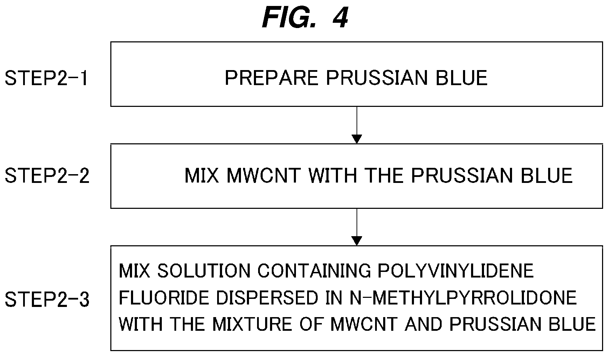

Next, an embodiment of the method of producing the slurry used for manufacturing the all-solid-state potassium ion-selective electrode will be described with reference to a flowchart shown in FIG. 4. In step 2-1, Prussian blue represented by the above-mentioned structural formula (3) is prepared. In step 2-2, multi-wall carbon nanotubes (which will be hereinafter referred to as "MWCNT") are mixed with the Prussian blue. The Prussian blue functions as a positive-electrode active material, and MWCNT functions as a conductive material.

In step 2-3, a solution containing polyvinylidene fluoride dispersed in N-methylpyrrolidone is added to and mixed with the mixture of Prussian blue and MWCNT. The N-methylpyrrolidone functions as a dispersion medium, and the polyvinylidene fluoride functions as a binder.

The potassium ion-sensitive membrane stock liquid is a mixture of ionophore, anion excluder, plasticizer, membrane matrix, and dispersion medium. More specifically, the potassium ion-sensitive membrane stock liquid is produced by mixing bis(benzo-15-crown-5) as the ionophore, potassium tetrakis(4-chlorophenyl) borate as the anion excluder, o-nitrophenyl octyl ether as the plasticizer, polyvinyl chloride as the membrane matrix, and tetrahydrofuran as the dispersion medium for 2 hours. The mixing ratio (weight ratio) of the o-nitrophenyl octyl ether, the bis(benzo-15-crown-5), the potassium tetrakis(4-chlorophenyl) borate, and the polyvinyl chloride is 65.5 : 0.9 : 0.3 : 33.3.

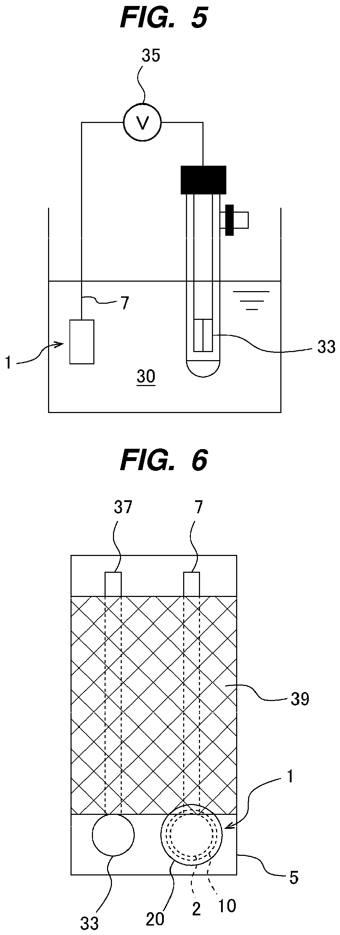

FIG. 5 is a schematic diagram showing an embodiment of a method of measuring a concentration of ions in a solution. The electrode 1 and a reference electrode 33 are coupled to a voltage measuring device 35. In this state, the electrode 1 and the reference electrode 33 are brought into contact with an objective liquid 30. A potential difference is generated between the electrode 1 and the reference electrode 33 depending on the ion concentration to be measured in the objective liquid 30. This potential difference is measured by the voltage measuring device 35 and is converted into an ion concentration by an ion concentration converter (not shown).

In the example shown in FIG. 5, the electrode 1 is the all-solid-state potassium ion-selective electrode, and the objective liquid 30 is a KCl aqueous solution. In the ion-sensitive membrane 20 of the electrode 1, a membrane potential is generated depending on a difference in K⁺ activity between the objective liquid 30 and the insertion material 10. As a result, the potential difference is generated between the electrode 1 and the reference electrode 33 depending on the concentration of potassium ions in the objective liquid 30.

FIG. 6 is a schematic diagram showing another application example of the all-solid-state ion-selective electrode 1. Configurations of this embodiment, which will not be particularly described, are the same as the configurations described with reference to FIG. 1 and FIG. 2, and their repetitive descriptions will be omitted. Reference electrode 33 is formed on the substrate 5. Conductive wire 7 and conductive wire 37 are fixed to the substrate 5 and coupled to the conductor 2 of the electrode 1 and the reference electrode 33, respectively. A part of the conductive wire 7 and a part of the conductive wire 37 are covered with a protective film 39 made of an insulator. An example of the protective film 39 is an epoxy coat.

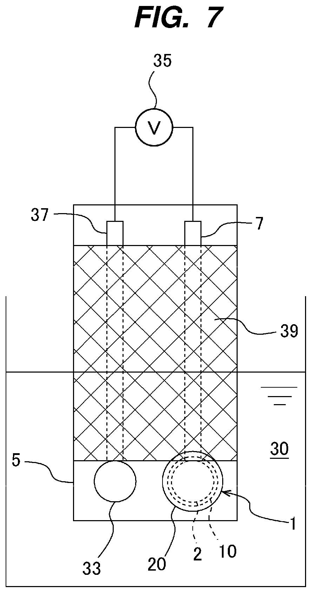

FIG. 7 is a schematic diagram showing an embodiment of an ion concentration measuring method using the all-solid-state ion-selective electrode 1 shown in FIG. 6. The electrode 1 and the reference electrode 33 are coupled to the voltage measuring device 35. In this state, the electrode 1 and the reference electrode 33 are brought into contact with objective liquid 30. A potential difference is generated between the electrode 1 and the reference electrode 33 depending on the ion concentration to be measured in the objective liquid 30. This potential difference is measured by the voltage measuring device 35 and is converted into an ion concentration by an ion concentration converter (not shown).

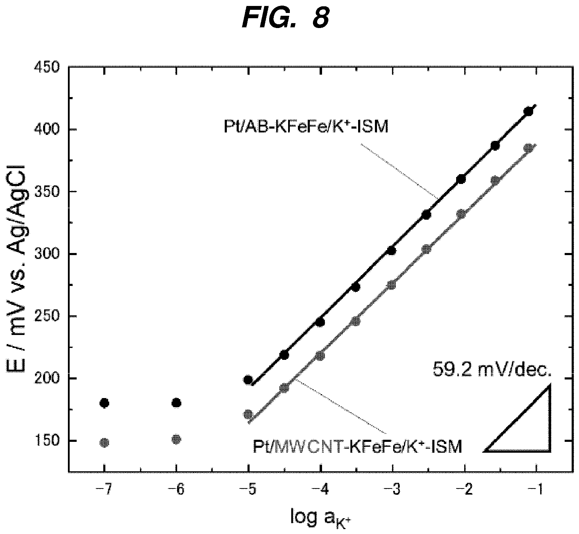

FIG. 8 is a diagram showing a calibration curve (or a standard curve) obtained by measuring the potential of the all-solid-state potassium ion-selective electrode 1 in KCl aqueous solutions having different concentrations. FIG. 8 and the following drawings show data obtained from an ion-sensitive membrane (Pt/MWCNT-KFeFe/K⁺-ISM) made of platinum/MWCNT/Prussian blue and reference data obtained from an ion-sensitive membrane (Pt/AB-KFeFe/K⁺-ISM) made of platinum/acetylene black/Prussian blue using acetylene black as a conductive material. As can be seen in FIG. 8, the all-solid-state potassium ion-selective electrode 1 shows good linearity in a K⁺ concentration range of 10⁻⁵ to 10⁻¹M, and its slope is close to a theoretical value of 59.2 mV decade which is obtained from the Nernst equation. The result shows the fact that the all-solid-state potassium ion-selective electrode 1 has a good electrochemical response to K⁺.

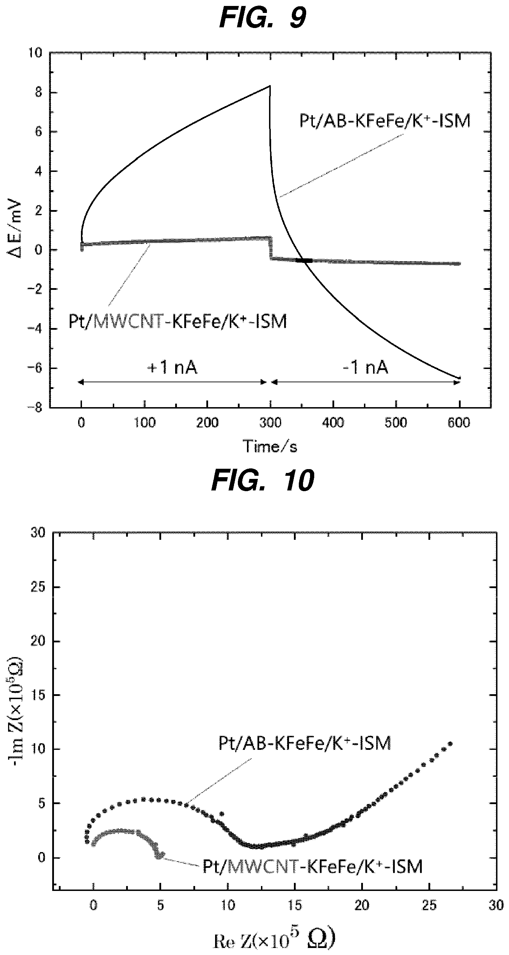

FIG. 9 shows a result of evaluating electrode resistance conducted by chronopotentiometry. The Pt/AB-KFeFe/K⁺-ISM electrode shows polarization of ±5 mV or more upon application of a minute current, whereas the Pt/MWCNT-KFeFe/K⁺-ISM electrode shows polarization of ±1 mV or less. It can be seen from this result that the electrode resistance can be significantly reduced by using MWCNT. FIG. 10 shows a result of evaluating the resistance of the electrode conducted by AC impedance measurement. The Pt/MWCNT-KFeFe/K⁺-ISM electrode has a capacitive semicircle whose diameter is smaller than that of the Pt/AB-KFeFe/K⁺-ISM electrode. This shows the fact that a significant reduction in electrode resistance can be achieved. Use of MWCNT as a conductive material having a higher conductivity than that of acetylene black (AB) can improve the electronic conductivity of the composite electrode layer, thus making it easier to transfer electrons based on oxidation-reduction of Prussian blue (KFeFe). As a result, it is assumed that an interfacial resistance is significantly reduced and potential stability is greatly improved. It can be concluded from the above results that the potential stability can be improved by using MWCNT as a conductive material of the insertion material.

The all-solid-state ion-selective electrode 1 according to each of the embodiments described above includes the insertion material 10 between the conductor 2 and the ion-sensitive membrane 20. The electrons are exchanged between the conductor 2 and the ion-sensitive membrane 20 via the insertion material 10. The insertion material 10 can improve the performance of exchanging the electrons between the conductor 2 and the ion-sensitive membrane 20, and can lower the resistance value of the electrode 1. As a result, the electrode 1 can improve the potential stability. Specifically, the detected value of the electrode 1 is hardly affected by dark current flowing from the potentiostat and vibrations around the measuring system.

Furthermore, the all-solid-state ion-selective electrode 1 according to each of the embodiments described above can improve the long-term stability of the detected value. Specifically, even if a sample is immersed in an objective liquid of the same concentration, there will be little variation in the detected value for several days. Experiment of evaluating the long-term stability showed a potential fluctuation of about 15 mV over 7 days. The all-solid-state ion-selective electrode using the insertion material has an excellent long-term stability because Prussian blue plays the role of the internal reference electrode.

Although embodiments of the present invention have been discussed above, the present invention is not limited to the above-discussed embodiments and may be implemented in various different forms within the scope of its technical concept.

### Industrial Applicability

The present invention is applicable to an all-solid-state ion-selective electrode having an insertion material, and a method of manufacturing such an all-solid-state ion-selective electrode.

## Claims

1. An all-solid-state potassium ion-selective electrode comprising:
a conductor;
an insertion material formed on a surface of the conductor; and
a potassium ion-sensitive membrane covering the insertion material,
the insertion material including at least a Prussian blue analog represented by a structural formula KₓFe[Fe(CN)₆]_{y}·nH₂O, where x is a numerical number larger than 0 and less than or equal to 2, y is a numerical number larger than 0 and less than or equal to 1, and n is a numerical number larger than or equal to 0.

2. A manufacturing method for an all-solid-state potassium ion-selective electrode, comprising:
producing slurry containing Prussian blue represented by a structural formula KₓFe[Fe(CN)₆]_{y}·nH₂O, where y is a numerical number larger than 0 and less than or equal to 1, and x is a numerical number larger than 0 and less than or equal to 2, n is a numerical number larger than or equal to 0;
supplying the slurry onto a conductor and drying the slurry to form a compound membrane on a surface of the conductor;
forming an insertion material on the surface of the conductor by immersing the compound membrane in a first potassium chloride aqueous solution and making K⁺ of the Prussian blue uniform;
forming an ion-sensitive stock membrane on a surface of the insertion material by supplying a potassium ion-sensitive membrane stock liquid to the surface of the insertion material and drying the potassium ion-sensitive membrane stock liquid; and
forming a potassium ion-sensitive membrane on the surface of the insertion material by immersing the ion-sensitive stock membrane in a second potassium chloride aqueous solution.

3. The manufacturing method according to claim 2, wherein the insertion material includes at least a Prussian blue analog represented by a structural formula KₓFe[Fe(CN)₆]_{y}·nH₂O, where x is a numerical number larger than 0 and less than or equal to 2.

4. The manufacturing method according to claim 2 or 3, wherein producing the slurry includes mixing the Prussian blue, multi-wall carbon nanotubes, and polyvinylidene fluoride.
